**Europäisches Patentamt**

**European Patent Office**

**Office européen des brevets**

(19)

(11) Veröffentlichungsnummer: **0 124 071**
**B1**

(12)

# EUROPÄISCHE PATENTSCHRIFT

(45) Veröffentlichungstag der Patentschrift:
**22.03.89**

(51) Int. Cl.⁴: **C 08 G 18/42, C 08 G 65/32,
C 08 G 65/26, C 07 C 69/80**

(21) Anmeldenummer: **84104608.9**

(22) Anmeldetag: **25.04.84**

(54) Verfahren zur Herstellung von elastischen, kompakten oder zelligen Polyurethanen.

(30) Priorität: **28.04.83 DE 3315382**

(43) Veröffentlichungstag der Anmeldung:
**07.11.84 Patentblatt 84/45**

(45) Bekanntmachung des Hinweises auf die Patenterteilung:
**22.03.89 Patentblatt 89/12**

(84) Benannte Vertragsstaaten:
**BE DE FR GB IT**

(56) Entgegenhaltungen:
**EP-A- 0 087 517
FR-A- 2 103 528
FR-A- 2 180 122
US-A- 4 229 362
US-A- 4 403 093**

(73) Patentinhaber: **BASF Aktiengesellschaft,
Carl-Bosch-Strasse 38, D-6700 Ludwigshafen (DE)**

(72) Erfinder: **Straehle, Wolfgang, Dr., Hirschgasse 20,
D-6900 Heidelberg (DE)**
Erfinder: **Buethe, Ingolf, Dr., Am Wasserturm 1,
D-6737 Boehl-Iggelheim (DE)**
Erfinder: **Marx, Matthias, Dr., Seebacher Strasse 49,
D-6702 Bad Duerkheim (DE)**

## Beschreibung

Die Herstellung von elastischen, kompakten oder zelligen Polyurethanen (PUR) durch Umsetzung von organischen Polyisocyanaten mit organischen Polyhydroxylverbindungen in Gegenwart von Katalysatoren und gegebenenfalls Kettenverlängerungs- oder Vernetzungsmitteln sowie Treibmitteln, Hilfsmitteln und Zusatzstoffen ist aus zahlreichen Patent- und Literaturveröffentlichungen bekannt. Verweisen möchten wir beispielsweise auf die Monographien von I.H. Saunders und K.C. Frisch, High Polymers, Band XVI, «Polyurethanes», Teil I und II (Verlag Interscience Publishers, New York 1962 bzw. 1964) und von R. Vieweg und A. Höchtlen, Kunststoff-Handbuch, Band VII, Polyurethane, Carl Hanser Verlag, München 1966.

Zur Herstellung von flammbeständigen halbharten oder harten PUR-Schaumstoffen finden als Polyhydroxylverbindungen vielfach Estergruppen enthaltende Polyether-polyole Anwendung.

Derartige Polyether-polyester-polyole werden nach Angaben der DE-A-19 23 936 (US-A-3 585 185), US-A-3 639 541 und US-A-3 639 542 erhalten durch Umsetzung von gegebenenfalls Phosphorverbindungen als Startermoleküle enthaltenden Polyether-polyolen mit halogenhaltigen Carbonsäureanhydriden, insbesondere Tetrabrom- oder Tetrachlorphthalsäureanhydrid, zu Carbonsäurehalbestern und anschließender Oxalkylierung der freien Carboxylgruppen.

Nach Angaben der EP-A-468 werden Polyolmischungen mit einer Funktionalität von 2,8 bis 4,5 mit Tetrachlorphthalsäureanhydrid im Verhältnis von Hydroxyl- zu Anhydridgruppen von 1 bis 1,1:1 zu Tetrachlorphthalsäurehalbestern umgesetzt und diese anschließend im Äquivalenzverhältnis von Carboxylgruppe zu Alkylenoxid von 1:1 bis 1,5 oxalkyliert. Die erhaltenen chlorhaltigen Polyether-polyester-polyole eignen sich zur Herstellung von harten Polyurethan- oder Polyisocyanuratschaumstoffen.

Die DE-A-1 568 249 (US-A-3 455 886) beschreibt die Oxalkylierung von Reaktionsprodukten, hergestellt aus Carbonsäureanhydrid und Alkoholen oder Aminen im Äquivalenzverhältnis von 0,1 bis 2,0:1, mit 1,5 bis 14 Molen Alkylenoxid pro Äquivalent eingesetztem Carbonsäureanhydrid. Auch diese Polyether-polyester-polyole finden Verwendung zur Herstellung von halbharten und harten PUR-Schaumstoffen.

Die Oxalkylierung wird üblicherweise in Gegenwart von Basen, beispielsweise Alkalihydroxiden oder -alkoholaten, oder Säuren als Katalysator durchgeführt. Nachteilig hierbei ist, daß die Katalysatoren aufgrund ihrer geringen Selektivität nicht nur die Oxalkylierung der Carboxylgruppen, sondern auch die Addition von Alkylenoxiden an die resultierenden oder bereits vorhandenen Hydroxylgruppen der Polyester- oder Polyether-polyole beschleunigen. Um eine vollständige Veresterung aller Carboxylgruppen sicherzustellen, muß daher mit einem großen Überschuß an Alkylenoxiden bei gleichzeitig langer Reaktionsdauer oxalkyliert werden. Nachteilig ist ferner, daß die Katalysatoren nach beendeter Umsetzung wieder aus dem Reaktionsgemisch abgetrennt werden müssen, wozu langwierige und kostspielige Reinigungsoperationen erforderlich sind.

Um eine nachträgliche Reinigung zu vermeiden, wird gemäß EP-A-468 und DE-A-1 568 249 die Oxalkylierung der gegebenenfalls halogenhaltigen Carbonsäurehalbester vorzugsweise in Abwesenheit von Katalysator durchgeführt. Bei der unkatalysierten Oxalkylierung ist jedoch ebenfalls ein großer Alkylenoxidüberschuß notwendig, um alle Carboxylgruppen zu verestern. Nachteilig ist außerdem, daß die nicht umgesetzten Alkylenoxide, bis zu 15 Gew.% der eingesetzten Menge, abdestilliert und entsorgt werden müssen, was sowohl die Wirtschaftlichkeit dieses Verfahrens als auch dessen Umweltfreundlichkeit in Frage stellt.

Zur Beseitigung dieses Nachteils werden die Carbonsäurehalbester nach der EP-A-87 517 (Stand der Technik nach Art. 54 (3) EPÜ) mit einem Mol Alkylenoxid pro Äquivalent Carboxylgruppe in Gegenwart von Thio-dialkylenglykol als Katalysator oxalkyliert. Nach diesem Verfahren werden insbesondere dann sehr gute Ergebnisse erzielt, wenn man zur Herstellung der Carbonsäurehalbester Glutarsäureanhydrid verwendet.

Aus dem genannten Stand der Technik ist jedoch nicht zu entnehmen, daß die beschriebenen Polyether-polyester-polyole auch zur Herstellung von elastischen, kompakten oder zelligen Polyurethanen verwendet wurden.

Die Aufgabe der vorliegenden Erfindung bestand darin, die mechanischen Eigenschaften von elastischen, gegebenenfalls zelligen, Polyurethanen allgemein zu verbessern, wobei insbesondere die Stauchhärte erhöht werden sollte, ohne hierbei Eigenschaften, wie Zugfestigkeit und Dehnung, welche sich üblicherweise gegenläufig verhalten, negativ zu beeinflussen.

Diese Aufgabe konnte überraschenderweise gelöst werden durch die Verwendung von nach speziellen Methoden hergestellten Polyether-polyester-polyolen, wobei Polyetherole in Gegenwart ausgewählter Katalysatoren mit Carbonsäureanhydrid umgesetzt und die hierbei gebildeten endständigen Carboxylgruppen mit möglichst geringen Mengen Alkylenoxid oxalkyliert werden, als Polyhydroxylverbindungen.

Aus FR-A 2 103 528 ist es zwar schon bekannt, bei der Herstellung von Polyurethanschaumstoffen als Polyolkomponente Alkoxylierungsprodukte von Halbestern aus Carbonsäureanhydriden und Polyetherolen einzusetzen; diese Polyolkomponenten werden jedoch unter Verwendung anderer Katalysatoren, vorzugsweise sogar katalysatorfrei, hergestellt. Derartige Polyole haben den Nachteil einer relativ hohen Säurezahl, was zu Schwierigkeiten hinsichtlich der Reproduzierbarkeit der Verfahrensbedingungen bei der Schaumherstellung führt. Überraschenderweise haben demgegenüber die im erfindungsgemäßen Verfahren einzusetzenden, mittels spezieller Katalysatoren hergestellten Polyole eine deutlich verminderte Säurezahl.

Gegenstand der Erfindung ist somit ein Verfahren zur Herstellung von elastischen, kompakten oder zelligen Polyurethanen durch Umsetzung von

a) organischen Polyisocyanaten mit

b) organischen Polyhydroxylverbindungen in Gegenwart von

c) Katalysatoren und gegebenenfalls

d) Kettenverlängerungs- oder Vernetzungsmitteln,

e) Treibmitteln,

f) Hilfsmitteln und/oder Zusatzstoffen, in welchem man als Polyhydroxylverbindungen b) zu mindestens 30 Gew.%, bezogen auf gesamte Komponente b), di- bis tetrafunktionelle Polyether-polyester-polyole mit Hydroxylzahlen von 10 bis 200 verwendet, die hergestellt worden sind durch Veresterung von

i) di- bis tetrafunktionellen Polyetherolen mit Hydroxylzahlen von 15 bis 250 mit Carbonsäureanhydriden in Gegenwart von N-Methylimidazol und/oder Triethylendiamin als Katalysator zu Carbonsäurehalbestern und anschließender

ii) Oxalkylierung der Carbonsäurehalbester mit Alkylenoxiden in Gegenwart einer Mischung aus N-Methylimidazol und/oder Triethylendiamin und Triphenylphosphin und/oder Thio-di-alkylenglykol als Katalysator, wobei die Katalysatormenge 0,05 bis 2,0 Gew.-Teile, bezogen auf 100 Gew.-Teile Carbonsäurehalbester bzw. der Mischung aus Polyol und Carbonsäureanhydrid, beträgt.

Nach dem erfindungsgemäßen Verfahren hergestellte elastische, kompakte oder zellige Polyurethane besitzen ein signifikant höheres mechanisches Eigenschaftsniveau als dies mit üblichen Polyetherolen zu erreichen wäre. Zellige Polyurethane zeigen eine verbesserte Stauchhärte, wobei die Zugfestigkeit und Dehnung nicht, wie zu erwarten gewesen wäre, verschlechtert, sondern gleichzeitig erheblich verbessert wurde. Diese vorteilhaften Ergebnisse wurden erzielt mit den erfindungsgemäß verwendbaren Polyether-polyester-polyolen, wobei übliche di- bis tetrafunktionelle Polyetherole, unabhängig von der chemischen Zusammensetzung der Aufbaukomponenten und Struktur sowie der Hydroxyzahl durch die Modifizierung mit Carbonsäureanhydrid zu Carbonsäurehalbestern und anschließender Oxalkylierung die gewünschte Verbesserung der Polyurethane ergaben, unter der Voraussetzung, daß zur Oxalkylierung eine möglichst geringe Menge Alkylenoxid pro gebildeter Carboxylgruppe eingesetzt wird. Eine derartige Oxalkylierung kann mit Hilfe der genannten speziellen Katalysatoren erzielt werden.

Die Verbesserung der mechanischen Eigenschaften der Polyurethane ist jedoch auch abhängig von der Art des Carbonsäureanhydrids. Mit aromatischen Carbonsäureanhydriden modifizierte Polyether-polyester-polyole ergeben ein insgesamt besseres Eigenschaftsniveau der Polyurethane, als es mit aliphatischen Carbonsäureanhydriden modifizierten Produkten zu erreichen ist.

Zur Herstellung der elastischen, kompakten oder vorzugsweise zelligen Polyurethane nach dem erfindungsgemäßen Verfahren eignen sich die an sich bekannten organischen Polyisocyanate. In Betracht kommen beispielsweise aliphatische, cycloaliphatische, araliphatische und vorzugsweise aromatische mehrwertige Isocyanate. Im einzelnen seien beispielhaft genannt: aliphatische Diisocyanate, wie Ethylen-, 1,4-Tetramethlen-, 1,6-Hexamethylen- und 1,12-Dodecandiisocyanat; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan, 2,4- und 2,6-Hexahydrotoluylen-diisocyanat sowie beliebige Gemische dieser Isomeren, 4,4'- und 2,4'-Diisocyanato-dicyclohexylmethan; aromatische Diisocyanate, wie 1,3- und 1,4-Phenylendiisocyanat, 2,4- und 2,6-Toluylendiisocyanat sowie beliebige Gemische dieser Isomeren, 2,2'-, 2,4'- und 4,4'-Diphenylmethan-diisocyanat und Naphthalin-1,5-diisocyanat; aromatische Polyisocyanate wie 4,4',4''-Triphenylmethan-triisocyanat, 2,4,6-Triisocyanatobenzol und Polyphenyl-polymethylenpolyisocyanate. Verwendet werden können ferner modifizierte Polyisocyanate, beispielsweise solche wie sie in der US-A-3 492 330 beschrieben werden, Carbodiimidgruppen aufweisende Polyisocyanate (DE-A-10 92 007), Allophanatgruppen aufweisende Polyisocyanate (GB-A-994 890; BE-A-761 626), Isocyanuratgruppen aufweisende Polyisocyanate (DE-A-10 22 789, DE-A-12 22 067, DE-A-10 27 394, DE-A-19 29 034 und DE-A-20 04 048), Urethangruppen aufweisende Polyisocyanate (BE-A-752 261, US-A-3 394 164), Biuretgruppen aufweisende Polyisocyanate (DE-A-11 01 394, GB-A-889 050) und Estergruppen aufweisende Polyisocyanate (GB-A-965 474, GB-A-10 72 956, US-A-3 567 763, DE-A-12 31 688).

Bevorzugt verwendet werden die technisch gut zugänglichen, gegebenenfalls Urethangruppen aufweisenden, aromatischen Di- und Polyisocyanate wie 2,4- und 2,6-Toluylendiisocyanat sowie beliebige Gemische dieser Isomeren, 2,2'- 2,4'- und 4,4'-Diphenylmethan-diisocyanat sowie beliebige Gemische dieser Isomeren, Mischungen aus 2,2'- 2,4'-, 4,4'-Diphenylmethan-diisocyanaten und Polyphenyl-polymethylen-polyisocyanaten (Roh-MDI) und Gemische aus Toluylen-diisocyanaten und Roh-MDI. Die genannten Di- und Polyisocyanate können einzeln oder in Form von Mischungen eingesetzt werden.

Wesentliches Merkmal der vorliegenden Erfindung ist die Verwendung von di- bis tetrafunktionellen, vorzugsweise 2,5- bis 3-funktionellen Polyether-polyester-polyolen mit Hydroxylzahlen von 10 bis 200, vorzugsweise von 25 bis 56 als organische Polyhydroxylverbindungen.

Diese werden hergestellt durch

i) Veresterung von üblichen Polyetherolen mit einer Funktionalität von 2 bis 4, vorzugsweise von 2,5 bis 3 und Hydroxyzahlen von 15 bis 250, vorzugsweise 30 bis 110 mit Carbonsäure-di- und/

oder -monoanhydriden, vorzugsweise aromatischen Carbonsäuremonoanhydriden in Gegenwart der oben genannten Katalysatoren zu Carbonsäurehalbestern und anschließender

ii) Oxalkylierung der Carbonsäurehalbester mit Alkylenoxiden in Gegenwart der oben genannten Katalysatorkombinationen, wobei vorzugsweise Mischungen aus N-Methylimidazol und/oder Triethylendiamin und Triphenylphosphin verwendet werden.

Zu den zur Herstellung der erfindungsgemäß verwendbaren Polyether-polyester-polyolen geeigneten Ausgangskomponenten ist folgendes auszuführen:

Übliche Polyetherole mit einer Funktionalität von 2 bis 4 und einer Hydroxylzahl von 15 bis 250 können hergestellt werden nach bekannten Verfahren, beispielsweise durch Polyaddition von einem oder mehreren Alkylenoxiden mit 2 bis 4 Kohlenstoffatomen im Alkylenrest an ein Startermolekül, das 2 bis 4, vorzugsweise 2,5 bis 3 aktive Wasserstoffatome gebunden enthält, in Gegenwart von sauren oder vorzugsweise basischen Katalysatoren, wie z.B. Alkalihydroxid oder Alkalialkoholat, oder durch Polymerisation von Tetrahydrofuran mit bekannten Katalysatoren, wie z.B. Borfluoridetherat, Antimonpentachlorid oder Bleicherde.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid. Die Alkylenoxide können einzeln alternierend nacheinander oder als Mischung verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan; Monoamine, wie Methylamin, Ethylamin, Isopropylamin, Butylamin, Benzylamin, Anilin, die Toluidine und Naphthylamine. Von den Verbindungen der erwähnten Gruppe sind besonders interessant
N,N,N',N'-Tetrakis-(2-hydroxyethyl)-ethylendiamine,
N,N,N',N'-Tetrakis-(2-hydroxypropyl)-ethylendiamin,
N,N,N',N'',N''-Pentakis-(2-hydroxypropyl)-ethylentriamin,
Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethyl-diethanolamin, N-Methyl- und N-Ethyl-dipropanolamin und Triethanolamin, Hydrazin und Hydrazide. Vorzugsweise verwendet werden zwei- bis vierwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan und Pentaerythrit.

Die Polyetherole können einzeln oder in Form von Mischungen eingesetzt werden. Vorzugsweise verwendet werden Polyetherole, die bezogen auf das Gesamtgewicht an polymerisierten Alkylenoxidgruppen maximal 30 Gew.%, vorzugsweise 5 bis 20 Gew.%, Ethylenoxideinheiten gebunden enthalten, mit Hydroxylzahlen von 15 bis 250 oder insbesondere Polypropylenether-glykole und/oder -triole mit Hydroxylzahlen von 30 bis 110.

Als Carbonsäureanhydride finden gegebenenfalls halogensubstituierte aliphatische Monoanhydride, gegebenenfalls substituierte cycloaliphatische Di- und/oder Monoanhydride und gegebenenfalls substituierte aromatische Dianhydride und/oder vorzugsweise aromatische Monoanhydride Verwendung. Im einzelnen seien beispielhaft genannt: aliphatische Carbonsäureanhydride wie z.B. Maleinsäure-, Dichlormaleinsäure-, Bernsteinsäure- und Glutarsäureanhydrid, cycloaliphatische Carbonsäureanhydride, wie z.B. Hexahydro- und Tetrahydrophthalsäureanhydrid und vorzugsweise aromatische Carbonsäureanhydride wie z.B. Tetrachlorphthalsäure-, Tetrabromphthalsäure-, Trimellithsäureanhydrid, Pyromellithsäuredianhydrid und vorzugsweise Phthalsäureanhydrid.

Zur Herstellung der Carbonsäurehalbester (i) werden die Polyetherole oder Polyetherolmischungen und die Carbonsäureanhydride oder -mischungen zweckmäßig bei Temperaturen von 50 bis 240°C, vorzugsweise 90 bis 200°C, und Reaktionszeiten von 0,5 bis 8 Stunden, vorzugsweise 1 bis 4 Stunden, in Gegenwart von N-Methylimidazol und/oder Triethylendiamin zur Reaktion gebracht. Die Aufbaukomponenten werden hierzu meist in solchen Mengen verwendet, daß pro Äquivalent Polyetherol 0,25 bis 1,05 Äquivalente, vorzugsweise 0,95 bis 1,0 Äquivalente Carbonsäureanhydrid in der Reaktionsmischung vorliegen. Die Katalysatoren werden in einer Menge von 0,05 bis 2,0 Gew.-Teilen, vorzugsweise 0,1 bis 0,4 Gew.-Teilen pro 100 Gew.-Teilen der Reaktionsmischung, bestehend aus Polyetherol und Carbonsäureanhydrid eingesetzt.

Die erhaltenen Carbonsäurehalbester werden danach in Gegenwart von 0,05 bis 2,0 Gew.-Teilen, vorzugsweise 0,1 bis 0,4 Gew.-Teilen, bezogen auf 100 Gew.-Teile Carbonsäurehalbester, der genannten Oxalkylierungskatalysatoren mit in der Regel 1 bis 4 Molen, vorzugsweise einem Mol 1,2-Propylenoxid und/oder insbesondere Ethylenoxid pro Äquivalent Carboxylgruppe oxalkyliert (ii).

Besonders vorteilhafte Ergebnisse werden erzielt, so daß insbesondere nach dieser Variante verfahren wird, wenn man im Anschluß an die Carbonsäurehalbesterherstellung (i) in Gegenwart von N-Methylimidazol und/oder Triethylendiamin der Reaktionsmischung zur Oxalkylierung (ii) zusätzlich Triphenylphosphin einverleibt, so daß eine Katalysatormischung aus N-Methylimidazol und/oder Triethylendiamin und Triphenylphosphin wirksam wird.

Als Oxalkylierungskatalysatoren geeignete Thio-dialkylenglykole besitzen 2 bis 6, vorzugsweise 2 bis 3 Kohlenstoffatome im Alkylenrest. Beispielhaft genannt seien Thio-dihexylenglykol, Thio-dibutylenglykol und vorzugsweise Thiodipropylen- und/oder Thio-diethylenglykol.

Die Oxalkylierung der Carbonsäurehalbester wird üblicherweise bei Temperaturen von 80 bis 160 °C, vorzugsweise 90 bis 130 °C, bei Normaldruck oder vorzugsweise unter erhöhtem Druck, von z.B. 0,5 bis 10 bar, vorteilhafterweise in Gegenwart von unter den Reaktionsbedingungen inerten Gasen, wie Stickstoff, Helium, Neon u.a. oder deren Gemischen durchgeführt.

Bevorzugt nach Erreichung einer Säurezahl von kleiner als 1 wird die Oxalkylierung beendet. Sofern die Reaktionsmischung noch freies monomeres Alkylenoxid enthält, wird dieses zweckmäßigerweise unter vermindertem Druck abdestilliert. Eine Abtrennung der zur Carbonsäurehalbesterherstellung und Oxalkylierung verwendeten Katalysatoren aus den erhaltenen Polyether-polyester-polyolen ist nicht erforderlich.

Zur Herstellung der elastischen, kompakten oder zelligen Polyurethane nach dem erfindungsgemäßen Verfahren können die Polyether-polyester-polyole einzeln oder in Form von Mischungen zur Anwendung kommen. Bewährt haben sich auch Mischungen aus den erfindungsgemäß verwendbaren Polyether-polyester-polyolen und anderen organischen Polyhydroxylverbindungen mit einer Funktionalität von 2 bis 4, vorzugsweise von 2,5 bis 3 und Hydroxylzahlen von 10 bis 200, vorzugsweise 30 bis 110, wie z.B. Hydroxylgruppen aufweisenden Polyestern, Polyesteramiden, Polyacetalen, Polycarbonaten und vorzugsweise Pfropfpolymerisat-polyetherolen, Füllstoff-polyetherol-Dispersionen und üblichen Polyetherolen, sofern die Mischungen mindestens 30 Gew.%, vorzugsweise 50 bis ungefähr 100 Gew.%, bezogen auf das Gesamtgewicht der erfindungsgemäßen Polyether-polyester-polyole, enthalten.

Gegebenenfalls kann es zweckmäßig sein, neben den erfindungsgemäß erforderlichen Polyether-polyester-polyolen und gegebenenfalls anderen organischen Polyhydroxylverbindungen zur Einführung von Hartsegmenten in die kompakten oder zelligen Polyurethane Kettenverlängerungs- oder Vernetzungsmittel mitzuverwenden. Als derartige Mittel kommen polyfunktionelle, insbesondere di- und trifunktionelle Verbindungen mit Molekulargewichten von 17 bis 600, vorzugsweise 60 bis 300, in Betracht. Verwendet werden beispielsweise Di- und Trialkanolamine, wie Diethanolamin und Triethanolamin, aliphatische und aromatische Diamine, wie z.B. Ethylendiamin, Butylendiamin-1,4, Hexamethylendiamin-1,6, 4,4′-Diamino-diphenylmethan, 3,3′-dialkylsubstituierte 4,4′-Diaminodiphenylmethane, 3,3′,5,5′-tetraalkylsubstituierte 4,4′-Diamino-diphenylmethane, 2,4- und 2,6-Toluylendiamin und vorzugsweise aliphatische Diole und Triole mit 2 bis 6 Kohlenstoffatomen, wie Ethylenglykol, 1,4-Butylenglykol, 1,6-Hexamethylenglykol, Glyzerin und Trimethylolpropan.

Sofern Kettenverlängerungs- und Vernetzungsmittel eingesetzt werden, kommen diese in Mengen von 1 bis 10, vorzugsweise von 1 bis 4 Gew.-Teilen pro 100 Gew.-Teilen Polyether-polyester-polyol zur Anwendung.

Zu Treibmitteln, welche im erfindungsgemäßen Verfahren zur Herstellung von zelligen Polyurethanen verwendet werden können, gehört vorzugsweise Wasser, das mit Isocyanatgruppen unter Bildung von Kohlendioxid reagiert. Die Wassermengen, die zweckmäßigerweise verwendet werden, betragen 0,5 bis 20 Gew.-Teile, vorzugsweise 1,5 bis 10 Gew.-Teile, und insbesondere 2 bis 6 Gew.-Teile, bezogen auf 100 Gew.-Teile Polyether-polyester-polyole und gegebenenfalls üblichen Polyhydroxylverbindungen.

Im Gemisch mit Wasser oder allein können auch physikalisch wirkende Treibmittel eingesetzt werden. Geeignet sind Flüssigkeiten, welche gegenüber den organischen Polyisocyanaten inert sind und Siedepunkte unter 100 °C, vorzugsweise unter 50 °C, insbesondere zwischen −50 °C und 30 °C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie Pentan, n- und iso-Butan und Propan, Ether, wie Dimethylether und Diethylether, Ketone, wie Aceton und Methylethylketon, Ethylacetat und vorzugsweise halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die erforderliche Menge in physikalisch wirkenden Treibmittein kann in Abhängigkeit von der gegebenenfalls eingesetzten Wassermenge und der gewünschten Schaumstoffdichte auf einfache Weise ermittelt werden und beträgt in Abwesenheit von Wasser ungefähr 1 bis 40 Gew.-Teile, vorzugsweise 3 bis 15 Gew.-Teile pro 100 Gew.-Teile Polyether-polyester-polyol und gegebenenfalls Polyhydroxylverbindung. Gegebenenfalls kann es zweckmäßig sein, das organische Polyisocyanat mit dem physikalisch wirkenden Treibmittel zu mischen und dadurch die Viskosität zu verringern.

Zur Beschleunigung der Umsetzung zwischen den Polyether-polyester-polyolen, gegebenenfalls weiteren Polyhydroxylverbindungen, Wasser, Kettenverlängerungs- oder Vernetzungsmittel und den organischen Polyisocyanaten werden der Reaktionsmischung übliche Polyurethankatalysatoren einverleibt. Vorzugsweise verwendet werden basische Polyurethankatalysatoren, beispielsweise tertiäre Amine, wie Dimethylbenzylamin, Dicyclohexylmethylamin,
Dimethylcyclohexylamin,
N,N,N',N'-Tetramethyl-diaminobutan,
N,N,N',N'-Tetramethyl-diamino-ethylether,
Bis-(dimethylaminopropyl)-harnstoff,
N-Methyl- bzw. N-Ethylmorpholin,
Dimethylpiperazin, Pyridin,
1,2-Dimethylimidazol,
1-Azobicyclo-(3,3,0)-octan,
Dimethylaminoethanol,
2-(Dimethylaminoethoxi)-ethanol,
N,N',N''-Tris-(dialkylaminoalkyl)-hexahydro-
triazine,
z.B. N,N',N''-Tris-(dimethylaminopropyl)-s-hexa-
hydrotriazin
und insbesondere Triethylendiamin. Geeignet sind jedoch auch Metallsalze, wie Eisen-(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen. Eingesetzt werden zweckmäßigerweise 0,1 bis 10 Gew.%, vorzugsweise 0,5 bis 5 Gew.%, Katalysator auf Basis tertiärer Amine und/oder 0,01 bis 0,5 Gew.%, vorzugsweise 0,05 bis 0,25 Gew.%, Metallsalze, bezogen auf das Gewicht der Polyether-polyester-polyole und gegebenenfalls Polyhydroxylverbindungen.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gew.-Teilen, bezogen auf 100 Gew.-Teile Polyether-polyester-polyol und gegebenenfalls Polyhydroxylverbindungen angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien beispielhaft genannt:

anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Ruß, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669 (US 3 304 273, 3 383 351, 3 523 093), 11 52 536 (GB 1 040 452) und 11 52 537 (GB 987 618) hergestellt werden sowie Fillerpolyetherole, bei denen wäßrige Polymerdispersionen in Polyetheroldispersionen übergeführt werden.

Die anorganischen und organischen Füllstoffe können einzeln oder als Gemische verwendet werden. Vorzugsweise Anwendung finden stabile Füllstoff-Polyetherol-Dispersionen, bei denen die Füllstoffe in Gegenwart von Polyetherolen in situ mit hohen örtlichen Energiedichten auf eine Teilchengröße kleiner als 7 μm zerkleinert und hierbei gleichzeitig dispergiert werden. Füllstoff-Polyetherol-Dispersionen dieser Art werden beispielsweise in den deutschen Offenlegungsschriften 28 50 609, 28 50 610 und 29 32 304 beschrieben.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Polyether-polyester-polyol-
Mischung
einverleibt.

Geeignete Flammschutzmittel sind beispielsweise
Trikresylphosphat,
Tris-2-chlorethylphosphat,
Tris-chlorpropylphosphat und
Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer ein- und mehrwertiger Alkohole und halogenierter Phthalsäurederivate zum Flammfestmachen der elastischen, kompakten oder zelligen Polyurethane verwendet werden. Im allgemeinen hat es sich als zweckmäßig erwiesen, 5 bis 50 Gew.-Teile, vorzugsweise 5 bis 25 Gew.-Teile der genannten Flammschutzmittel für jeweils 100 Gew.-Teile an Polyether-polyester-polyol zu verwenden.

Nähere Angaben über die obengenannten anderen üblichen Hilfs- und Zusatzstoffe sind der Fachliteratur, beispielsweise der Monographie von J.H. Saunders und K.C. Frisch «High Polymers», Band XVI, Polyurethanes, Teil 1 und 2, Verlag Interscience Publishers 1962 bzw. 1964, zu entnehmen.

Zur Herstellung der Polyurethane nach dem erfindungsgemäßen Verfahren werden die organischen Polyisocyanate und Polyether-polyester-polyole und gegebenenfalls organischen Polyhydroxylverbindungen, Kettenverlängerungs- und Vernetzungsmittel in Gegenwart von Katalysatoren und gegebenenfalls Treibmitteln, Hilfsmitteln und Zusatzstoffen bei Temperaturen von 0 bis 70 °C, vorzugsweise 15 bis 50 °C in solchen Mengenverhältnissen zur Reaktion gebracht, daß pro NCO-Gruppe 0,5 bis 2, vorzugsweise 0,8 bis 1,6 und insbesondere ungefähr ein reaktive(s) Wasserstoffatom(e) gebunden an Polyether-polyester-polyol, gegebenenfalls weiterer Polyhydroxylverbindung, Wasser und Kettenverlängerungs- oder Vernetzungsmittel vorliegen.

Die elastischen, kompakten oder zelligen Polyurethane können nach dem Prepolymerverfahren hergestellt werden. Hierzu werden die Polyether-polyester-polyole mit Polyisocyanaten, vorzugsweise mit Mischungen aus 4,4'- und 2,4'-Diphenylmethan-diisocyanaten oder Mischungen aus Diphenylmethan-diisocyanaten und Polyphenyl-polymethylen-polyisocyanaten mit einem Diphenylmethayn-diisocyanatgehalt von über 60 Gew.%, nach bekannten Methoden in Isocyanatgruppen aufweisende Präpolymere übergeführt. Die Isocyanatgruppen aufweisenden Präpolymeren können als solche oder in Form einer Mischung mit Polyisocyanaten, vorzugsweise einer Mischung aus Diphenylmethan-diisocyanaten und Polyphenyl-polymethylen-polyisocyanaten, mit Polyether-polyester-polyolen oder/und organischen Polyhydroxylverbindungen sowie gegebenenfalls Kettenverlängerungs- oder Vernetzungsmitteln in Gegenwart von Katalysatoren und gegebenenfalls Treibmitteln, Hilfsmitteln und Zusatzstoffen zur Reaktion gebracht werden.

Vorzugsweise werden die elastischen, kompakten oder zelligen Polyurethane jedoch nach dem one shot-Verfahren hergestellt. Hierzu werden die Aufbaukomponenten, Hilfsmittel und Zusatzstoffe bei Verwendung einer Mischkammer mit mehreren Zulaufdüsen einzeln zugeführt und in der Mischkammer intensiv vermischt. Als besonders zweckmäßig hat es sich jedoch erwiesen, so daß diese Verfahrensweise bevorzugt angewandt wird, nach dem Zweikomponenten-Verfahren zu arbeiten und die Polyether-polyester-polyole und/oder organischen Polyhydroxylverbindungen, Katalysatoren und gegebenenfalls Kettenverlängerungs- oder Vernetzungsmittel, Treibmittel, Hilfsmittel und Zusatzstoffe zu der sogenannten A-Komponente zu vereinigen und als B-Komponente die organischen, gegebenenfalls modifizierten Polyisocyanate oder/und die Isocyanatgruppen enthaltenden Präpolymeren gegebenenfalls im Gemisch mit physikalisch wirkenden Treibmitteln, Hilfsmitteln und Zusatzstoffen zu verwenden. Vorteilhaft hierbei ist, daß die A- und B-Komponente zur Herstellung der Polyurethane nur noch in den entsprechenden Mengenverhältnissen intensiv gemischt werden müssen. Die Aufbaukomponenten können auch nach dem one shot-Verfahren mit Hilfe der bekannten Reaktionsspritzgußtechnik (RIM-Verfahren) gemischt, in Formen eingebracht und in den geschlossenen Formen zu Polyurethanen ausgehärtet werden.

Die nach dem erfindungsgemäßen Verfahren hergestellten elastischen, kompakten Polyurethane besitzen Dichten von 0,8 bis 1,4 g/cm³, vorzugsweise von 1,1 bis 1,2 g/cm³, und zeichnen sich durch eine sehr gute Zugfestigkeit, Reißdehnung und Weiterreißfestigkeit aus. Die Produkte eignen sich zur Herstellung von hochabriebbeständigen Polyurethankunststststoff-Formteilen, wie z.B. Rollen, Gleitschuhen, Gleitkanten für Schneeräumgeräte u.a.

Die elastischen, zelligen Polyurethane besitzen Dichten von 0,2 bis 1,2 g/cm³, wobei Schuhsohlen eine Dichte vorzugsweise von 0,3 bis 0,7 g/cm³ und RIM-Formteile eine Dichte vorzugsweie von 0,7 bis 1,1 g/cm³ aufweisen und zeigen eine sehr gute Stauchhärte, Zugfestigkeit und Dehnung. Die hochelastischen Schaumstoffe mit Dichten von 0,02 bis 0,2 g/cm³ eignen sich zur Herstellung von Polstermöbeln, Matratzen, Automobilsitzen und Nackenstützen sowie insbesondere für Formschaumstoffe. Die elastischen zelligen Polyurethane finden u.a. Verwendung als Automobilaußenteile, Stoßleisten, Stoßstangenumhüllungen und Kantenschutz.

Die in den Beispielen genannten Teile beziehen sich auf das Gewicht.

Zur Herstellung der elastischen, zelligen oder kompakten Polyurethane nach den Beispielen wurden folgende Ausgangsstoffe verwendet.

Polyol I:
Ein unter Verwendung von Glycerin als Startermolekül hergestelltes Polyoxypropylen-polyoxyethylen-blockcopolyether-triol mit einer OH-Zahl von 35 und einem Gehalt an polymerisierten Ethylenoxidgruppen von 15 Gew.%.

Polyol II:
Ein unter Verwendung von Glycerin als Startermolekül hergestelltes Polyoxypropylen-polyoxyethylen-copolyether-triol mit einer OH-Zahl von 42 und einem Gehalt an polymerisierten Ethylenoxidgruppen von 70 Gew.%, das die polymerisierten Alkylenoxidgruppen in statistischer Verteilung gebunden enthält.

Polyol III:
Ein unter Verwendung von Glycerin als Startermolekül hergestelltes Polyoxypropylen-polyoxyethylen-copolyether-triol mit einer OH-Zahl von 56 und einem Gehalt an polymerisierten Ethylenoxidgruppen von 11 Gew.%, von welchen drei Fünftel in statistischer Verteilung und zwei Fünftel als Endblock gebunden sind.

Polyol IV: Herstellungsvorschrift:

3000 Teile (1 Mol) Polyol III wurden mit 444 Teilen (3 Mol) Phthalsäureanhydrid in Gegenwart von 0,2 Gew.% N-Methylimidazol in einer Stickstoffatmosphäre 4 Stunden lang bei 180 °C unter Rühren verestert.

Die Reaktionsmischung ließ man auf 105 °C abkühlen, fügte 0,2 Gew.-Teile Thio-diethylenglykol hinzu und ethoxylierte bei 2 bar Stickstoffvordruck mit 132 Teilen (3 Mol) Ethylenoxid. Nach beendeter Ethoxylierung wurden die flüchtigen Bestandteile bei 105 °C und 0,01 bar abdestilliert. Das erhaltene Polyether-polyester-polyol besaß eine OH-Zahl von 49 und konnte ohne weitere Reinigung zur Polyurethanherstellung verwendet werden.

Polyol V: Herstellungsvorschrift:

Man verfuhr analog der Herstellung von Polyol IV, verwendete jedoch anstelle von Phthaläureanhydrid die äquivalente Menge Tetrahydrophthalsäureanhydrid und zur Ethoxylierung anstelle von Thio-diethylen-glykol 0,2 Gew.% Triphenylphosphin. Das erhaltene Polyether-polyester-polyol besaß eine OH-Zahl von 51.

Polyol VI: Herstellungsvorschrift:

3200 Teile (3 Mol) Polyoxypropylen-glykol mit einer OH-Zahl von 105 wurden mit 888 Teilen (6 Mol) Phthalsäureanhydrid in Gegenwart von 0,2 Gew.% N-Methylimidazol unter einer Stickstoffatmosphäre auf 180 °C erhitzt und bei dieser Temperatur 4 Stunden lang gerührt.

Die Reaktionsmischung ließ man danach auf 105 °C abkühlen, fügte 0,2 Gew.% Thiodiethylenglykol hinzu und propoxylierte bei 0,5 bar Stickstoffvordruck mit 348 Teilen (6 Mol) 1,2-Propylenoxid. Nach beendeter Propoxylierung wurden die flüchtigen Bestandteile bei 105 °C und 0,01 bar abdestilliert. Das erhaltene Polyether-polyesterpolyol besaß eine OH-Zahl von 81 und konnte ohne zusätzliche Reinigung zur Polyurethanherstellung verwendet werden.

Isocyanat A: Isocyanatgruppen enthaltendes Präpolymeres mit einem NCO-Gehalt von 23 Gew.%, das hergestellt wurde durch Umsetzung von 100 Teilen einer Mischung aus 4,4'- und 2,4'-Diphenylmethan-diisocyanat im Gewichtsverhältnis 75:25 und 39,5 Teilen Polyol IV bei 70 °C unter 2stündigem Rühren.

Isocyanat B: Isocyanatgruppen enthaltendes Präpolymeres mit einem NCO-Gehalt von 23 Gew.%, das hergestellt wurde analog Isocyanat A, jedoch unter Verwendung von 39,3 Teilen Polyol V.

Isocyanat C: Isocyanatgruppen enthaltendes Präpolymeres mit einem NCO-Gehalt von 27,3 Gew.%, das hergestellt wurde analog Isocyanat A, jedoch unter Verwendung von 18,7 Teilen Polyol VI.

Isocyanat D: Isocyanatgruppen enthaltendes Präpolymeres mit einem NCO-Gehalt von 23 Gew.%, das hergestellt wurde analog Isocyanat A, jedoch unter Verwendung von 38,8 Teilen Polyol III.

Isocyanat E: Polyisocyanatgemisch mit einem NCO-Gehalt von 32,6 Gew.%, bestehend aus 40 Teilen einer Mischung aus 45 Gew.% Diphenylmethan-diisocyanaten und 55 Gew.% Polyphenyl-polymethylen-polyisocyanaten (roh-MDI),
45 Teilen 4,4'-Diphenylmethan-diisocyanat und
15 Teilen 2,4'-Diphenylmethan-diisocyanat.

Isocyanat F: Isocyanatgruppen enthaltendes Präpolymeres mit einem NCO-Gehalt von 23 Gew.%, das hergestellt wurde durch Umsetzung von 100 Teilen 4,4'-Diphenylmethan-diisocyanat und 25,2 Teilen eines Polyoxypropylenglykols mit einer OH-Zahl von 250 bei 60 °C in 4 Stunden.

Beispiele 1 bis 3

Herstellung von elastischen, zelligen Polyurethanen unter Verwendung von Isocyanatgruppen enthaltenden Präpolymeren auf Polyether-polyester-polyol-Basis

A-Komponente: Mischung aus
86,4 Teilen Polyol I,
4,0 Teilen Polyol II,
2,8 Teilen Wasser,
0,35 Teilen Triethylendiamin (33 gew.%ige Lösung in Dipropylenglykol)
0,35 Teilen Bis-(N,N'-dimethylamino-diethylether,
0,1 Teilen Silikonstabilisator B 4690 (der Firma Goldschmidt, Essen) und
6 Teilen Trichlorfluormethan.

B-Komponente: Mischung aus
40 Teilen eines Gemisches aus Diphenylmethandiisocyanaten und Polyphenyl-polymethylen-polyisocyanaten mit einem NCO-Gehalt von 31 Gew.% (roh-MDI) und
60 Teilen Isocyanat gemäß Tabelle 1.

Die A und B-Komponenten wurden mit Index 100 bei Raumtemperatur (23 °C) 8 Sekunden lang intensiv gemischt; 800 g der Mischung wurden in eine auf 50 °C temperierte Aluminiumform mit den inneren Abmessungen 40 × 40 × 10 cm eingefüllt, die Form geschlossen und die Reaktionsmischung aufschäumen gelassen.

Die verwendeten Isocyanate und die an den erhaltenen Polyurethan-Weichschaumstoffen der Dichte 50 g/l gemessenen mechanischen Eigenschaften sind in Tabelle 1 zusammengefaßt.

Beispiele 4 und 5

Herstellung von elastischen, zelligen Polyurethanen unter Verwendung der Polyether-polyester-polyole in der A-Komponente

A-Komponente: Mischung aus
100 Teilen Polyol gemäß Tabelle 2,
2,8 Teilen Wasser
0,2 Teilen Silikonstabilisator B 46 90 (der Firma Goldschmidt, Essen),
0,4 Teilen Bis-(N,N-dimethylamino)-diethylether und
0,35 Teilen Triethylendiamin (33 gew.%ige Lösung in Dipropylenglykol)

Tabelle 1

| Beispiele | | 1 | 2 | 3 | Vgl. Bsp. |
| Isocyanat | | A | B | C | D |
|---|---|---|---|---|---|
| Zugfestigkeit nach DIN 53 571 | [k.Pa] | 110 | 100 | 120 | 80 |
| Reißdehnung nach DIN 53 571 | [%] | 94 | 97 | 105 | 86 |
| Weiterreißfestigkeit nach DIN 53 575 | [N/mm] | 0,41 | 0,42 | 0,57 | 0,38 |
| Stauchhärte bei 40% Stauchung nach DIN 53577 | [k.Pa] | 6,0 | 5,5 | 5,9 | 4,8 |

B-Komponente: Isocyanat E.

Die A- und B-Komponente wurden mit Index 105 bei Raumtemperatur (23 °C) 8 Sekunden lang intensiv gemischt; 800 g der Mischung wurden in eine auf 50 °C temperierte Aluminiumform mit den inneren Abmessungen 40 × 40 × 10 cm eingefüllt, die Form verschlossen und die Reaktionsmischung aufschäumen gelassen.

Die verwendeten Polyole und die an den erhaltenen Polyurethan-Weichschaumstoffen der Dichte 50 g/l gemessenen mechanischen Eigenschaften sind in Tabelle 2 zusammengefaßt:

Tabelle 2

| Beispiele | | 4 | 5 | Vgl. Bsp. |
| Polyol | | IV | V | III |
|---|---|---|---|---|
| Zugfestigkeit nach DIN 53 571 | [k.Pa] | 200 | 180 | 140 |
| Reißdehnung nach DIN 53 571 | [%] | 122 | 133 | 115 |
| Weiterreißfestigkeit nach DIN 53 575 | [N/mm] | 0,7 | 0,61 | 0,49 |
| Stauchhärte bei 40% Stauchung nach DIN 53577 | [k.Pa] | 7,9 | 5,8 | 4,5 |

Beispiel 6

Herstellung eines elastischen, kompakten Polyurethans A-Komponente: Mischung aus

100    Teilen eines Polyols gemäß Tabelle 3,
7    Teilen Butandiol-1,4
0,7    Teilen Triethylendiamin (33 gew.%ige Lösung in Dipropylenglykol) und
0,03 Teilen Dibutylzinndilaurat.

B-Komponente: Isocyanat F.

Die A- und B-Komponente wurden mit Index 104 bei Raumtemperatur (23 °C) intensiv gemischt und die Mischung in eine auf 50 °C temperierte Aluminiumform mit den inneren Abmessungen 200 × 200 × 4 mm eingebracht. Die Aushärtung der reaktionsfähigen Polyurethanmischung zu einem Elastomeren erfolgte in der geschlossenen Form sehr rasch.

Die verwendeten Polyole und die an den erhaltenen Polyurethan-Elastomeren gemessenen mechanischen Eigenschaften sind in Tabelle 3 zusammengefaßt.

Tabelle 3

| Polyol | | Beispiel 6 IV | Vergleichs- beispiel III |
|---|---|---|---|
| Zugfestigkeit nach DIN 53 571 | [$10^6$ Pa] | 3,21 | 2,27 |
| Reißdehnung nach DIN 53 571 | [%] | 140 | 80 |
| Weiterreißfestigkeit nach DIN 53 575 | [N/mm] | 8,9 | 6,0 |

## Patentansprüche

1. Verfahren zur Herstellung von elastischen, kompakten oder zelligen Polyurethanen durch Umsetzung von
   a) organischen Polyisocyanaten mit
   b) organischen Polyhydroxylverbindungen in Gegenwart von
   c) Katalysatoren und gegebenenfalls
   d) Kettenverlängerungs- oder Vernetzungsmitteln,
   e) Treibmitteln,
   f) Hilfsmitteln und/oder Zusatzstoffen,
in welchem man als Polyhydroxylverbindungen b) zu mindestens 30 Gew.%, bezogen auf gesamte Komponente b), di- bis tetrafunktionelle Polyether-polyester-polyole mit Hydroxylzahlen von 10 bis 200 verwendet, die hergestellt worden sind durch Veresterung von
   i) di- bis tetrafunktionellen Polyetherolen mit Hydroxylzahlen von 15 bis 250 mit Carbonsäureanhydriden in Gegenwart von N-Methylimidazol und/oder Triethylendiamin als Katalysator zu Carbonsäurehalbestern und anschließender
   ii) Oxalkylierung der Carbonsäurehalbester mit Alkylenoxiden in Gegenwart einer Mischung aus N-Methylimidazol und/oder Triethylendiamin und Triphenylphosphin und/oder Thio-dialkylenglykol als Katalysator, wobei die Katalysatormenge 0,05 bis 2,0 Gew.-Teile, bezogen auf 100 Gew.-Teile der Mischung aus Polyol und Carbonsäureanhydrid bzw. auf 100 Gew.-Teile Carbonsäurehalbester beträgt.

2. Verfahren nach Anspruch 1, dadurch gekennzeichnet, daß man die ii) Oxalkylierung der Carbonsäurehalbester mit Alkylenoxiden in Gegenwart einer Mischung aus N-Methylimidazol und/oder Triethylendiamin und Triphenylphosphin durchführt.

3. Verfahren nach Anspruch 1 oder 2, dadurch gekennzeichnet, daß die Polyetherole maximal 30% polymerisierte Ethylenoxideinheiten gebunden enthalten.

4. Verfahren nach Anspruch 1 bis 3, dadurch gekennzeichnet, daß man zur Herstellung der Carbonsäurehalbester aromatische Carbonsäureanhydride, vorzugsweise Phthalsäureanhydrid, verwendet.

5. Verfahren nach Anspruch 1 bis 4, dadurch gekennzeichnet, daß man zur Herstellung der Carbonsäurehalbester ein Äquivalent Polyetherol mit 0,25 bis 1,05 Äquivalenten Carbonsäureanhydrid verestert.

6. Verfahren nach Anspruch 1 bis 5, dadurch gekennzeichnet, daß man als Alkylenoxide 1,2-Propylenoxid, Mischungen aus 1,2-Propylenoxid und Ethylenoxid oder vorzugsweise Ethylenoxid verwendet.

7. Verfahren nach Anspruch 1 bis 6, dadurch gekennzeichnet, daß man zur Oxalkylierung (ii) pro Carboxylgruppe der Carbonsäurehalbester 1 bis 4 Mol Alkylenoxid verwendet.

## Claims

1. A process for preparing an elastic, compact or cellular polyurethane by reacting
   a) an organic polyisocyanate with
   b) an organic polyhydroxy compound in the presence of
   c) a catalyst and optionally
   d) a chain extending or crosslinking agent,
   e) a blowing agent,
   f) an assistand and/or an additive,
wherein polyhydroxy compound b) comprises to an extent not less than 30% by weight, based on total component b), a di-, tri- or tetrafunctional polyether polyester polyol having a hydroxyl number of from 10 to 200 and having been prepared by esterification of
   i) a di-, tri- or tetrafunctional polyetherol having a hydroxyl number of from 15 to 250 with a carboxylic anhydride in the presence of N-methylimidazole and/or triethylenediamine as a catalyst to give a carboxylic monoester and subsequent
   ii) alkoxylation of the carboxylic monoester with an alkylene oxide in the presence of a mixture of N-methylimidazole and/or triethylenediamine and triphenylphosphine and/or a thiodialkylene glycol as a catalyst, the amount of catalyst being from 0.05 to 2.0 parts by weight, based on 100 parts by weight of the mixture of polyol and carboxylic anhydride or on 100 parts by weight of carboxylic monoester.

2. A process as claimed in claim 1, wherein the alkoxylation ii) of the carboxylic monoester with alkylene oxide is carried out in the presence of a mixture of N-methylimidazole and/or triethylenediamine and triphenylphosphine.

3. A process as claimed in claim 1 or 2, wherein the polyetherol contains bonded not more than 30% of polymerized ethylene oxide units.

4. A process as claimed in claim 1 or 2 or 3, wherein the carboxylic monoester is prepared using an aromatic carboxylic anhydride, preferably phthalic anhydride.

5. A process as claimed in claim 1 or 2 or 3 or 4, wherein to prepare the carboxylic monoester one equivalent of a polyetherol is esterified with from 0.25 to 1.05 equivalents of a carboxylic anhydride.

6. A process as claimed in claim 1 or 2 or 3 or 4 or 5, wherein the alkylene oxide used is 1,2-propylene oxide, a mixture of 1,2-propylene oxide and ethylene oxide or preferably ethylene oxide.

7. A process as claimed in claim 1 or 2 or 3 or 4 or 5 or 6, wherein in alkoxylation (ii) from 1 to 4 moles of alkylene oxide are used per carboxyl group of the carboxylic monoester.

## Revendications

1. Procédé de préparation de polyuréthanes élastiques, compacts ou cellulaires, par la réaction
   a) de polyisocyanates organiques sur
   b) des composés organiques polyhydroxylés, en présence

c) de catalyseurs et, éventuellement,
d) d'agents d'allongement des chaînes ou de réticulation,
e) d'agents porogènes,
f) d'adjuvants et/ou d'additifs, dans lequel on utilise, à titre de composés polyhydroxylés b), au moins 30% en poids, par rapport au composant b) total, de polyéther-polyester-polyols di- à tétrafonctionnels, avec des indices d'hydroxyle de 10 à 200, qui ont été préparés par l'estérification

i) de polyéthérols di- à tétra-fonctionnels avec des indices d'hydroxyle de 15 à 250, avec des anhydrides d'acides carboxyliques en présence de N-méthylimidazole et/ou de triéthylènediamine à titre de catalyseur, en hémiesters d'acides carboxyliques et

ii) l'oxalkylation subséquente des hémiesters d'acides carboxyliques avec des oxydes d'alkylène en présence d'un mélange de N-méthylimidazole et/ou de triéthylènediamine et de triphénylphosphine et/ou d'un thiodialkylèneglycol à titre de catalyseur, où la quantité de catalyseur atteint 0,05 à 2,0 parties en poids, par rapport à 100 parties en poids du mélange de polyol et d'anhydride d'acide carboxylique, ou par rapport à 100 parties en poids d'hémiester d'acide carboxylique.

2. Procédé suivant la revendication 1, caractérisé en ce que l'on réalise l'oxalkylation ii) des hémiesters d'acides carboxyliques avec des oxydes d'alkylène, en présence d'un mélange de N-méthylimidazole et/ou de triéthylènediamine et de triphénylphosphine.

3. Procédé suivant la revendication 1 ou 2, caractérisé en ce que les polyéthérols contiennent en liaison au maximim 30% d'unités oxyde d'éthylène polymérisées.

4. Procédé suivant les revendications 1 à 3, caractérisé en ce qu'en vue de la préparation des hémiesters d'acides carboxyliques, on utilise des anhydrides d'acides carboxyliques aromatiques, de préférence l'anhydride phtalique.

5. Procédé suivant les revendications 1 à 4, caractérisé en ce qu'en vue de la préparation des hémiesters d'acides carboxyliques, on estérifie un équivalent de polyéthérol avec de 0,25 à 1,05 équivalent d'anhydride d'acide carboxylique.

6. Procédé suivant les revendications 1 à 5, caractérisé à ce qu'à titre d'oxydes d'alkylène, on utilise l'oxyde de 1,2-propylène, des mélanges d'oxyde de 1,2-propylène et d'oxyde d'éthylene ou, de préférence, l'oxyde d'éthylène.

7. Procédé suivant les revendications 1 à 6, caractérisé en ce qu'en vue de l'oxalkylation (ii) on utilise de 1 à 4 moles d'oxyde d'alkylène par radical carboxyle des hémiesters d'acides carboxyliques.